(19) Europäisches Patentamt
European Patent Office
Office européen des brevets

(11)  **EP 4 191 241 B1**

(12)  # EUROPEAN PATENT SPECIFICATION

(45) Date of publication and mention
of the grant of the patent:
**30.07.2025  Bulletin 2025/31**

(21) Application number: **21212365.7**

(22) Date of filing: **03.12.2021**

(51) International Patent Classification (IPC):
**G01N 29/22** (2006.01)     **G01N 29/32** (2006.01)

(52) Cooperative Patent Classification (CPC):
**G01N 29/022; G01N 29/036; G01N 29/222;
G01N 29/326;** G01N 2291/0255; G01N 2291/0256

---

(54) **QCM APPARATUS**

QCM-GERÄT

APPAREIL QCM

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.06.2023  Bulletin 2023/23**

(73) Proprietor: **Biolin Scientific AB
426 77 Västra Frölunda (SE)**

(72) Inventor: **SVENSSON, Peter
426 70 Västra Frölunda (SE)**

(74) Representative: **Lind Edlund Kenamets
Intellectual Property AB
Kungsportsavenyn 25
411 36 Göteborg (SE)**

(56) References cited:
**CN-B- 109 374 730      JP-A- 2018 019 215
JP-A- 2018 141 700      US-A1- 2009 173 158**

---

## Description

Field of the invention

The present invention relates to a quartz crystal microbalance (QCM) sensing apparatus with improved temperature control.

Background of the invention

Quartz crystal microbalance (QCM) sensing has gained increasing popularity as an efficient sensing technique for detecting molecular adsorption (or desorption) on a substrate. In QCM sensing a liquid containing a substance is allowed to flow past a sensing element (QCM sensor) including a crystal disc sandwiched between a pair of electrodes. An AC voltage is connected to the electrodes, causing the disc to oscillate at its acoustic resonance frequency, and the system is allowed to reach a steady state. As molecular adsorption creates a film on the QCM sensor surface, the resonance frequency changes. A frequency detection device is connected to detect this change, thereby allowing determination of the mass of the adsorption layer.

One particularly useful sensing approach is QCM with dissipation monitoring, referred to as QCM-D. In QCM-D sensing, the induced oscillation is allowed to decay ("ring off") and an energy dissipation factor is determined. Changes in this dissipation factor are related to the viscoelasticity (softness) of the adsorption layer.

In QCM sensing applications, it is well known that temperature control is critical, and that even a rather small temperature change may cause interference in the same order of magnitude as the actual measurement signals. For this purpose, most QCM measurement systems are provided with a temperature control system, typically including a thermoelectric control element (e.g. a Peltier element), optionally a heat source/heat sink, a suitably placed temperature sensor, and suitable control logic. The thermoelectric element is typically arranged on the opposite side of the QCM sensor with respect to the measurement channel.

One example is provided by CN 109 374 730 B where one temperature sensor is provided above the sensor chip. Another example is provided by JP 2018 0192215 A where two temperature sensors are arranged below the QCM sensor.

However, despite adequate temperature control, it has been noted that the QCM resonance frequency will still require an extensive time period to adapt to a new temperature setting.

Based on this, it would be desirable to provide a QCM sensing apparatus with an improved temperature control.

General disclosure of the invention

This and other objects are achieved with a quartz crystal microbalance, QCM, sensor apparatus comprising a sensor holder having a substantially planar compartment for receiving a QCM sensor, a first temperature sensor and a second temperature sensor arranged separated from each other along a line transverse to the planar compartment, and a controller configured to determine a temperature difference, $\Delta T$, between the two sensors, and operating the QCM apparatus based on this temperature difference.

By "transverse" is intended a direction which includes a component normal to the planar extension of the compartment. As the temperature sensors are separated in this direction, the detected temperature difference $\Delta T$ will be indicative of a temperature gradient across the compartment, and thus across a sensor placed in the compartment.

It is noted that it is typically not possible to completely eliminate the temperature difference between the two sensors, due to thermal resistance in the QCM sensor and the measurement cell. However, the invention is based on the surprising realization that the QCM frequency measurement process is highly sensitive to changes in the temperature difference across the QCM sensor. It has been shown that the QCM frequency measurement will not be stable until the temperature gradient across the QCM sensor is substantially stable. As the detected temperature difference $\Delta T$ is indicative of the temperature gradient across the QCM sensor, the QCM frequency measurement will be stable when

$$\frac{d}{dt}\Delta T \approx 0$$

. By determining and monitoring not only the temperature in the measurement cell, but also the temperature difference $\Delta T$, the controller may therefore improve measurement performance during use of the QCM sensor apparatus.

For example, when the temperature difference is considered stable (variation within given limits) the controller may provide an indication that the QCM frequency measurement can be assumed to be stable and reliable.

Preferably, the apparatus comprises a thermoelectric element arranged in thermal connection with the sensor holder, which thermoelectric element is controlled by the controller. In this case, the controller may be configured to apply a temperature control based on temperature difference $\Delta T$ feedback, thereby ensuring a faster stabilization of the temperature difference $\Delta T$ and thus reliable QCM measurement. The temperature difference may be used as a feedback variable in a convention control loop, designed to stabilize this feedback variable.

The first and second temperature sensors are preferably arranged on opposite sides of the compartment. This even further improves the correlation between the detected temperature difference $\Delta T$ and the temperature gradient across the sensor. The operation of the apparatus may thus be even more reliable.

The apparatus may comprise an additional thermoelectric element arranged on an opposite side of the sensor holder with respect to the (first) thermoelectric element. Having two (or more) thermoelectric elements may improve the ability to more accurately control the temperature, and more quickly ensure the desired temperature.

The apparatus may further comprise a plurality of sample fluid containers, a fluid selector unit for selectively placing one of the sample fluid containers in fluid connection with a measurement cell formed above the sensor. The fluid selector unit has a plurality of inlet ports, each inlet port in fluid connection with a sample fluid container, a sensing outlet configured to be in fluid connection with the sensor, and a valve arrangement for selectively connecting one of the inlets to the outlet.

The fluid selector unit serves as a valve, to selectively connect one of the sample fluid containers to the measuring cell, and to provide a desired flow of sample fluid past the sensor. The fluid selector unit may be designed to integrate the fluid sample containers with the sensor holder in a relatively confined space. For example, the fluid selector unit may include a small-scale fluidics system, with channels and valves, to enable such integration. Examples of such small sale fluidics systems are sometimes referred to as a "lab-on-chip".

The fluid selector unit may be sandwiched between the fluid sample containers and the sample holder, which may also be advantageous for reducing the size of the apparatus.

The thermoelectrical element may be arranged on an opposite side of the sensor holder with respect to the sample fluid containers. In case of a vertical arrangement (sometimes referred to as a "vertical stack"), with the sample fluid containers in an upper part of the apparatus, this means that the thermoelectric element is arranged below the sensor holder, which is advantageous for thermal dissipation. In a vertical arrangement, force of gravity may promote fluid flow through the apparatus.

In one embodiment, the sample fluid containers, fluid selector unit and sensor holder are arranged inside a thermally insulating housing, an interior of the compartment having a substantially homogeneous temperature.

By integrating the components of the sensing apparatus into a comparably small space, and arranging them inside a temperature isolating housing, temperature control is significantly facilitated.

Brief description of the drawings

The present invention will be described in more detail with reference to the appended drawings, showing currently preferred embodiments of the invention.

Figure 1 is an exploded view of parts of a QCM sensing apparatus according to an embodiment of the invention.

Figure 2 is a perspective view of the apparatus in figure 1,

Figure 3 is a schematic view of the fluid control in the apparatus in figure 1.

Figure 4 shows in more detail an example of a valve arrangement in the apparatus in figure 1.

Detailed description of preferred embodiments

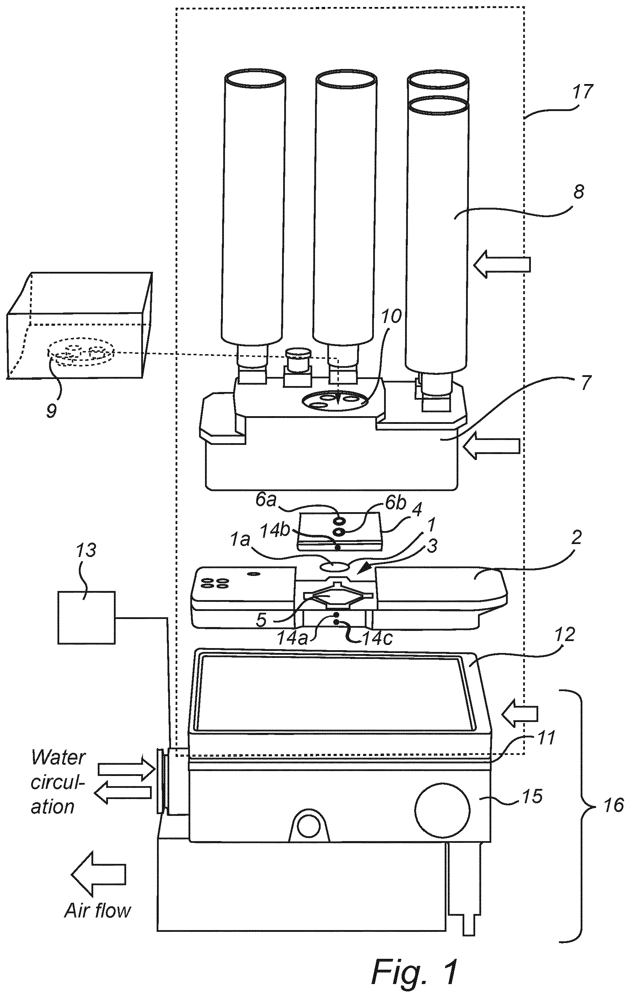

The QCM sensing apparatus in figure 1 includes a QCM sensor 1 arranged in a sensor holder 2. The QCM sensor includes a typically disc shaped crystal sandwiched between two electrical electrodes. The holder has a substantially planar compartment 3 configured to receive the sensor 1. The compartment is sealed by a lid 4. When a sensor 1 is placed in the compartment 3, and the compartment is closed by the lid 4, the space above the sensor 1 forms a measuring cell 5, allowing a fluid to flow across a surface 1a of the sensor 1. The lid 4 is provided with two openings 6a, 6b, providing access to the measuring cell 5.

In use, an AC voltage is connected to the electrodes, causing the crystal disc to oscillate at its acoustic resonance frequency, and the system is allowed to reach a steady state. A frequency detection device (not shown) is connected to detect and monitor this frequency. When fluid flows across the sensor, a film will be created on the sensor surface due to adsorption of molecules present in the fluid. The film will in turn cause a change of the resonance frequency.

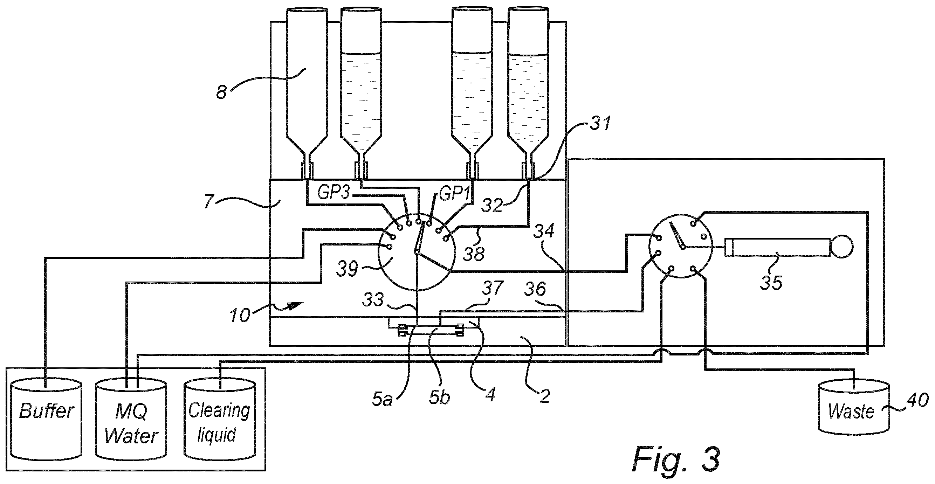

The apparatus further includes a plurality of sample fluid containers 8, here in the form of four vertical tubes, arranged on a fluid selector unit 7. The fluid selector unit 7 comprises a valve arrangement 10, configured to selectively connect one of the sample fluid containers 8 to the measuring cell 5. An actuator 9, e.g. an electrical step motor, is arranged in mechanical connection with the valve arrangement 10, so as to be capable of operating the valve arrangement 10 to connect one of the sample fluid containers 8 with the measurement cell 5. In the illustrated example, the actuator 9 has a set of pins (se figure 3) configured to engage corresponding recesses 10 in the valve arrangement 10.

The apparatus further includes a temperature control arrangement 16, here including a thermoelectric element 11, a heat transfer block 12, a controller 13, temperature sensors 14a, 14b, 14c and an optional heat source/sink 15.

The thermoelectric element 11 is arranged on an opposite side of the sample holder 2 with respect to the fluid selector unit 7 (i.e. below the sample holder 2 in figure 1). The thermoelectric element 11 may be e.g. a Peltier element. A heat transfer block 12 may be sandwiched between the sample holder 2 and the thermoelectric element 11 to improve heat transfer. Optionally, a heat source/sink 15 (heating or cooling) is arranged on the other side of the thermoelectric element 11. In some embodiments, an additional thermoelectric element (not shown) may be provided on the other side of the sensor holder, e.g. in or adjacent to the fluid selector 7.

The first and second temperature sensors are arranged so as toi be separated from each other along a line transverse to the planar extension of the sensor compartment 3 (and of the sensor 2 itself). In the illustrated example, the temeprature sensors 14a, 14b are arranged on opposite sides of the compartment 3. Specifically, a first temperature sensor 14a is arranged between the measurement cell 5 and the thermoelectric element 11, and a second sensor 14b is arranged on the opposite side of the measurement cell 5 (and thus of the sensor 1). In the illustrated example, the first sensor 14a is arranged in the body of the sensor holder 2, and the second sensor 14b is arranged in the lid 4 of the sensor holder 2.

A third temperature sensor 14c may be arranged in the heat transfer block 12, i.e. closer to the thermoelectric element 11.

A controller 13 is configured to control the thermoelectric element 11 (and optionally the heat source/-sink 15) based on feedback from the sensors 14a, 14b to reach and maintain a desired temperature in the measurement cell. By arranging several sensors in different locations, a faster and more accurate temperature control may be achieved. For example, multiple sensors may allow a control scheme known as "cascade control".

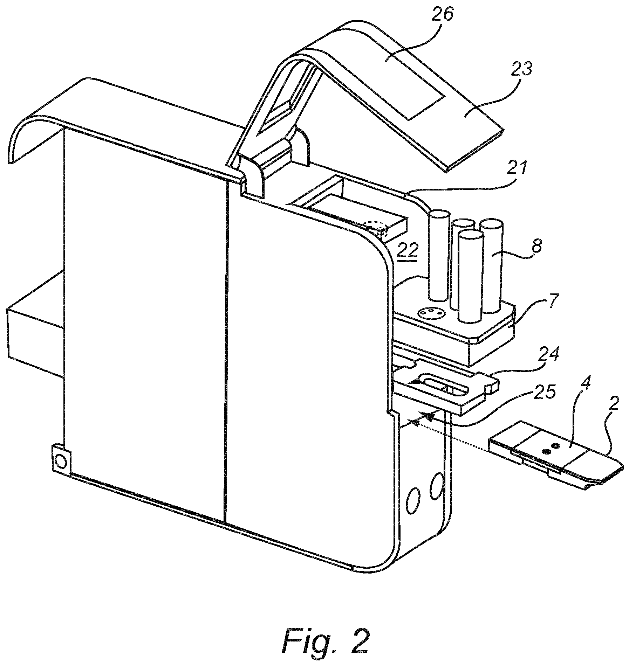

In some embodiments, the sample fluid containers 8, fluid selector unit 7, and sample holder 2 are enclosed by a thermally isolating enclosure (see figure 2), thereby defining a temperature zone 17 inside which the temperature is substantially homogeneous. The temperature inside the zone 17 is controlled to a desired temperature by temperature control arrangement 16.

It is noted that the QCM apparatus in figure 1 requires additional components in order to operational, such as signal generator, a frequency detection apparatus, and possibly air/water supply to the heat source. Such components are not disclosed in detail here, as they are not considered relevant for the disclosure of the present invention.

The controller 13 is further configured to determine a temperature difference, $\Delta T$, between the two sensors 14a, 14b on opposite sides of the measurement cell 5, and to operate the QCM apparatus based on this temperature difference $\Delta T$.

In one embodiment, the controller is configured to provide an indication (e.g. audio or visual) of when the temperature difference $\Delta T$ is stable (constant). For example, the controller 13 may provide a sound or light signal when the temperature difference has stayed within a given range for a given amount of time. The signal may be taken as an indication that the temperature difference is stable, and that consequently the measurement output of the apparatus may be considered to be accurate and reliable.

In another embodiment, the controller 13 is configured to control the thermoelectric element 11 using the temperature difference $\Delta T$ as a feedback variable. The feedback temperature control can thus be designed not only to reach and maintain a desired temperature, but also to keep the temperature difference $\Delta T$ constant. Such control may serve to more quickly reach a constant $\Delta T$, and thus a reliable measurement output.

It is noted that both approaches, i.e. indication of stable $\Delta T$ and feedback control of $\Delta T$, may be applied in combination.

If an additional thermoelectric element is arranged on the opposite side of the sensor holder 2 with respect to the thermoelectric element 11, i.e. above the sensor holder 2 in figure 1, regulation of temperature on both sides of the sensor 1 is possible, thereby facilitating control of the temperature difference $\Delta T$.

With reference to figure 2, the parts illustrated in figure 1 are arranged in a compartment 22 of an enclosure 21. It is this compartment 22 that forms the temperature zone 17. At least the part of enclosure 21 that surrounds the compartment 22 is designed to be thermally isolating, i.e. have a comparably large thermal resistance. As an example, the enclosure may be made of a plastic material. It may further comprise foam or other porous materials, serving as heat isolators. The enclosure may also comprise multiple rigid layers with air in between, similar to a thermos.

The enclosure 21 further has a lid 23 which is openable to allow access to the compartment 22. With the lid 23 in its open position, a sliding tray 24 may be pulled out, and the fluid selector unit 7 with its sample fluid containers 8 may be placed on the sliding tray 24 before it is pushed back into the compartment 22. The sensor holder 2 is insertable in a location 25 under the fluid selector unit. The sensor holder 2 is thus releasably arranged in the apparatus, independently of the fluid selector unit 7, and may be withdrawn in order to allow replacement of the sensor 1.

The lid may be provided with a transparent window 26, allowing a user to observe the fluid sample containers 8. In order to be heat isolating, the window may comprise double layers of suitable material, e.g. glass or transparent plastic. To improve visibility, the compartment 22 may further be provided with appropriate illumination (not shown).

Turning to figure 3, the fluid control of the QCM sensing apparatus in figures 1 - 2 is shown in more detail.

In the illustrated example, each sample fluid container 8 is provided with a bottom opening 31, connected to a corresponding inlet port 32 on the upper surface of the fluid selector unit 7. With this design, each inlet port 32 will be exposed to a fluid pressure from the pillar of sample fluid in the container 8.

The fluid selector unit 7 further has a first outlet 33, referred to as a sensing outlet, connected to opening 6a of the lid 4 of the sensor holder 2, thereby providing access to one end 5a of the measurement cell 5. In the illustrated example, the fluid selector unit 7 also has a second outlet referred to as a drain outlet 34.

A pump 35 is selectively connected to the other end 5b of the measurement cell 5 or the drain outlet 34. The pump 35 may be connected directly to opening 6b of the lid of the sample holder 2 to have access to the measurement cell 5. However, in the illustrated embodiment, the pump is connected to a port 36 of the fluid selection unit 7, and this port 36 is connected to the other end 5b of the measurement cell 5 via a conduit 37 formed in the fluid selector unit 7. With this design, the sensor holder 2 only requires a two-terminal interface with the fluid selector unit 7. This two-terminal interface is provided by the openings 6a, 6b.

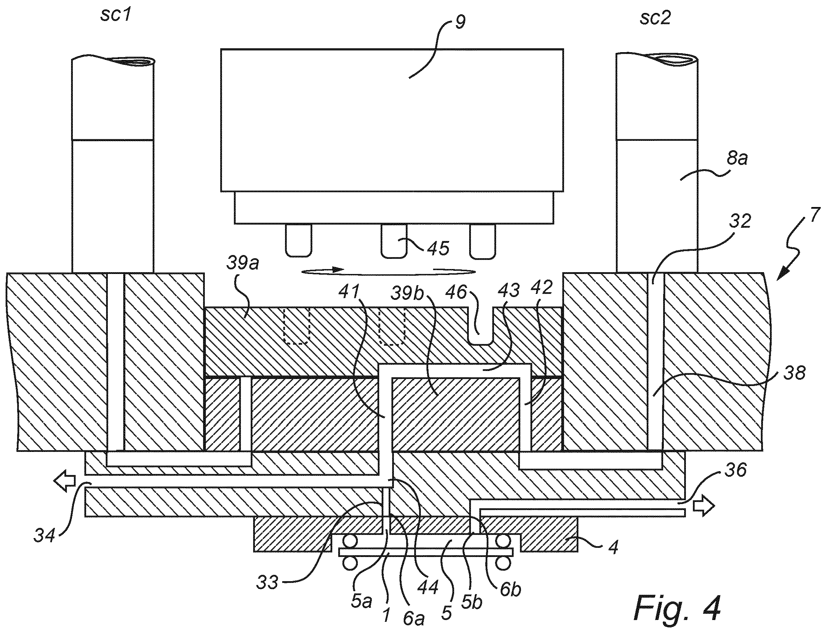

As mentioned above, a valve arrangement 10 is configured to selectively connect one of the inlet ports 32 with the sensing outlet 33, and also to the drain outlet 34 when available. The valve arrangement 10 generally includes a set of conduits 38 formed within a solid body of the selector unit 7, each conduit connecting one of the inlet ports 32 with the outlet(s) 33, 34. The valve arrangement is configured so that each conduit 38 has an open state, in which fluid is allowed to flow through the conduit, and a closed state, in which fluid is prevented from flowing through the conduit. In the illustrated example, the valve arrangement includes is a rotating disc valve 39, described in more detail with reference to figure 4.

When the pump 35 is connected to the measurement cell 5, a flow of fluid is created from a sample fluid container 8 connected to the sensing outlet 33 past the sensor 1, to a waste container 40. When the pump 35 is connected to the drain outlet 34, a flow is created directly from the connected sample fluid container to the waste container 40.

The details of the rotating disc valve 39 are shown more clearly in figure 4.

In the illustrated case, the disc valve 39 comprises a first, rotating disc 39a rotationally arranged on a second, stationary disc 39b. The stationary disc 39b has a central through channel 41, aligned with the axis of rotation, and a set of peripheral through channels 42 each arranged at a common radial distance from the central though channel. This means that the openings of the peripheral through channels 42 are located along a circle surrounding the central channel 41. The rotating disc 39a is formed with a radial connection channel 43, extending from the center to a peripheral position aligned with the channels 42. By rotating the rotating disc 39a, the central through channel 41 is connected to one of the peripheral through channels 42 by the radial channel 43.

In principle, the rotating disc 39a could rest directly on the surface of the fluid selector unit 7. However, the interface between rotating disc 39a and its support needs to be liquid tight, and thus requires high tolerance machining and surface processing. Therefore, it is easier to manufacture the valve with two discs rotationally connected with a liquid tight interface, and then sealingly fix (e.g. glue or solder) one of the discs to the supporting structure, i.e. in this case the fluid selector unit 7.

Each of the sample fluid containers 8 is connected to one of the peripheral through channels 42 by a conduit 38, while the central through channel 41 is connected to a mixing point 44, in fluid connection with sensing outlet 33 and drain outlet 34.

In use, the actuator 9 is mechanically connected to the rotating disc 39a, e.g. by protrusions 45 engaging recesses 46 in the rotating disc 39a. The actuator 9 rotates the rotating disc 39a to a desired position, in which one of the containers 8a is placed in fluid connection with the mixing point 44. Then, pump 35 is connected to drain outlet 34, and activated to promote a flow of liquid from the container 8a to the waste container 40. When it can be safely concluded that the sample fluid from container 8a has reached the mixing point 44, the pump 35 is instead connected to the outlet 36, connected to the measuring cell 5. This promotes a flow of liquid from container 8a past the sensor 1, thereby enabling measurement.

The person skilled in the art realizes that the present invention by no means is limited to the preferred embodiments described above. On the contrary, many modifications and variations are possible within the scope of the appended claims. For example, the shape and form of the apparatus may be different from the illustrated example. The relative arrangement of the various components may also be different, and for example are not necessarily arranged in a vertical stack.

**Claims**

1. A quartz crystal microbalance, QCM, sensor apparatus comprising:

   a sensor holder (2) having a compartment (3) for receiving a QCM sensor (1), said compartment having a substantially planar extension;
   a first temperature sensor (14a) and a second temperature sensor (14b) arranged separated from each other along a line transverse to said planar extension; and
   a controller (13) configured to determine a temperature difference ($\Delta T$) between the two sensors, and to operate the QCM sensor apparatus based on this temperature difference.

2. The sensor apparatus according to claim 1, wherein the controller is configured to provide an indication that a QCM frequency measurement is stable and reliable when said determined temperature difference has a variation within given limits.

3. The sensor apparatus according to claim 1, further comprising a thermoelectric element (11) arranged in thermal connection with the sensor holder (2), said thermoelectric element being controlled by said controller (13).

**4.** The sensor apparatus according to claim 3, wherein the controller (13) is configured to control said thermoelectric element (11) based on the determined temperature difference, so as to achieve a stable temperature difference.

**5.** The sensor apparatus according to any one of the preceding claims, wherein said first and second temperature sensors (14a, 14b) are arranged on opposite sides of the compartment.

**6.** The sensor apparatus according to any one of the preceding claims, further comprising an additional thermoelectric element arranged on an opposite side of the sensor holder with respect to the thermoelectric element (11).

**7.** The sensor apparatus according to any one of the preceding claims, further comprising:

a plurality of sample fluid containers (8),
a fluid selector unit (7) for selectively placing one of said sample fluid containers in fluid connection with said compartment, said fluid selector unit having:

a plurality of inlet ports (32), each inlet port in fluid connection with a sample fluid container (8),
a sensing outlet (33) configured to be in fluid connection with said sensor compartment, and
a valve arrangement (10) for selectively connecting one of said inlet ports (32) to said outlet (33).

**8.** The sensor apparatus according to claim 7, wherein said fluid selector unit (7) is sandwiched between the fluid sample containers (8) and the sample holder (2).

**9.** The sensor apparatus according to claim 7 or 8, further comprising a thermoelectrical element (11) arranged on an opposite side of the sensor holder (2) with respect to the sample fluid containers (8).

**10.** The sensor apparatus according to one of claims 7 - 9, wherein the sample fluid containers (8), fluid selector unit (7) and sensor holder (2) are arranged in a vertical stack arrangement.

**11.** The sensor apparatus according to one of claims 7 - 9, further comprising a thermally insulating housing (21) in which the sample fluid containers (8), fluid selector unit (7) and sensor holder (2) are contained, an interior of the housing (21) having a substantially homogeneous temperature.

**12.** The sensor apparatus according to claim 11,

wherein the sensor holder (2) is removably mounted inside the housing (21), and
wherein the housing (21) has an openable lid (23) to allow removal/insertion of the sensor holder (2).

**13.** The sensor apparatus according to claim 3, 4 or 9, wherein the thermoelectrical element is a Peltier element.

**Patentansprüche**

**1.** Quarzkristallmikrowaage (QCM) als ein Sensorgerät, das umfasst:

einen Sensorhalter (2), der eine Kammer (3) aufweist, um einen QCM-Sensor (1) aufzunehmen,
wobei die Kammer eine im Wesentlichen ebene Ausdehnung aufweist;
einen ersten Temperatursensor (14a) und einen zweiten Temperatursensor (14b), die getrennt voneinander entlang einer Linie, die quer zu der ebenen Ausdehnung verläuft, angeordnet sind; und
eine Steuereinheit (13), die konfiguriert ist, um eine Temperaturdifferenz ($\Delta$T) zwischen den zwei Sensoren festzustellen, und um das QCM-Sensorgerät auf der Grundlage dieser Temperaturdifferenz zu betreiben.

**2.** Sensorgerät nach Anspruch 1, wobei die Steuereinheit konfiguriert ist, um eine Anzeige bereitzustellen, dass eine QCM-Frequenzmessung stabil und zuverlässig ist, wenn die festgestellte Temperaturdifferenz eine Variation innerhalb der gegebenen Grenzen aufweist.

**3.** Sensorgerät nach Anspruch 1, das ferner ein thermoelektrisches Element (11) umfasst, das in einer thermischen Verbindung mit dem Sensorhalter (2) angeordnet ist, wobei das thermoelektrische Element durch die Steuereinheit (13) gesteuert wird.

**4.** Sensorgerät nach Anspruch 3, wobei die Steuereinheit (13) konfiguriert ist, um das thermoelektrische Element (11) auf der Grundlage der festgestellten Temperaturdifferenz zu steuern, um so eine stabile Temperaturdifferenz zu erreichen.

**5.** Sensorgerät nach einem der vorhergehenden Ansprüche, wobei der erste und der zweite Temperatursensor (14a, 14b) auf gegenüberliegenden Seiten der Kammer angeordnet sind.

**6.** Sensorgerät nach einem der vorhergehenden Ansprüche, das ferner ein zusätzliches thermoelektrisches Element umfasst, das auf einer gegenüberliegenden Seite des Sensorhalters in Bezug auf das thermoelektrische Element (11) angeordnet ist.

**7.** Sensorgerät nach einem der vorhergehenden Ansprüche, das ferner umfasst:

mehrere Probenfluidbehälter (8),
eine Fluidauswahleinheit (7), um einen der Probenfluidbehälter in einer Fluidverbindung mit der Kammer ausgewählt anzuordnen, wobei die Fluidauswahleinheit aufweist:

mehrere Einlassöffnungen (32), wobei sich jede Einlassöffnung in einer Fluidverbindung mit einem Probenfluidbehälter (8) befindet,
einen sensorischen Auslass (33), der konfiguriert ist, um in einer Fluidverbindung mit der Sensorkammer zu stehen, und
eine Ventilanordnung (10), um eine der Einlassöffnungen (32) mit dem Auslass (33) ausgewählt zu verbinden.

**8.** Sensorgerät nach Anspruch 7, wobei die Fluidauswahleinheit (7) zwischen den Probenfluidbehältern (8) und dem Probenhalter (2) eingespannt ist.

**9.** Sensorgerät nach Anspruch 7 oder 8, das ferner ein thermoelektrisches Element (11) umfasst, das auf einer gegenüberliegenden Seite des Sensorhalters (2) in Bezug auf die Probenfluidbehälter (8) angeordnet ist.

**10.** Sensorgerät nach einem der Ansprüche 7 bis 9, wobei die Probenfluidbehälter (8), die Fluidauswahleinheit (7) und der Sensorhalter (2) in einem vertikaler Stapel angeordnet sind.

**11.** Sensorgerät nach einem der Ansprüche 7 bis 9, das ferner ein thermisch isolierendes Gehäuse (21) umfasst, in dem die Probenfluidbehälter (8), die Fluidauswahleinheit (7) und der Sensorhalter (2) enthalten sind, wobei ein Inneres des Gehäuses (21) im Wesentlichen eine homogene Temperatur aufweist.

**12.** Sensorgerät nach Anspruch 11,

wobei der Sensorhalter (2) innerhalb des Gehäuses (21) abnehmbar befestigt ist, und
wobei des Gehäuses (21) eine Klappe (23) aufweist, die geöffnet werden kann, um die Entfernung/Einsetzung des Sensorhalters (2) zu ermöglichen.

**13.** Sensorgerät nach Anspruch 3, 4 oder 9, wobei das thermoelektrische Element ein Peltier-Element ist.

**Revendications**

**1.** Appareil capteur à microbalance à quartz QCM, comprenant :

un support de capteur (2) ayant un compartiment (3) pour recevoir un capteur QCM (1), ledit compartiment ayant une extension sensiblement plane ;
un premier capteur de température (14a) et un second capteur de température (14b) disposés séparés l'un de l'autre le long d'une ligne transversale à ladite extension plane ; et
une unité de commande (13) configurée pour déterminer une différence de température (ΔT) entre les deux capteurs et pour faire fonctionner l'appareil capteur QCM sur la base de cette différence de température.

**2.** Appareil capteur selon la revendication 1, dans lequel

le contrôleur est configuré pour fournir une indication qu'une mesure de fréquence QCM est stable et fiable lorsque ladite différence de température déterminée présente une variation dans des limites données.

**3.** Appareil capteur selon la revendication 1, comprenant en outre un élément thermoélectrique (11) agencé en connexion thermique avec le support de capteur (2), ledit élément thermoélectrique étant commandé ladite unité de commande (13).

**4.** Appareil capteur selon la revendication 3, dans lequel

l'unité de commande (13) est configurée pour commander ledit élément thermoélectrique (11) sur la base de la différence de température déterminée, de manière à obtenir une différence de température stable.

**5.** Appareil capteur selon l'une quelconque des revendications précédentes, dans lequel lesdits premier et second capteurs de température (14a, 14b) sont disposés sur des côtés opposés du compartiment.

**6.** Appareil capteur selon l'une quelconque des revendications précédentes, comprenant en outre un élément thermoélectrique supplémentaire disposé sur un côté du support de capteur opposé par rapport à l'élément thermoélectrique (11).

**7.** Appareil capteur selon l'une quelconque des revendications précédentes, comprenant en outre :

une pluralité de récipients d'échantillon de fluide (8),

une unité de sélection de fluide (7) pour placer sélectivement l'un desdits récipients d'échantillon de fluide en communication fluidique avec ledit compartiment, ladite unité de sélection de fluide comportant :

une pluralité d'orifices d'entrée (32), chaque orifice d'entrée étant en communication fluidique avec un récipient d'échantillon de fluide (8),

une sortie de détection (33) configurée pour être en communication fluidique avec ledit compartiment de détection, et

un agencement de soupape (10) permettant de raccorder sélectivement un desdits orifices d'entrée (32) à ladite sortie (33).

8. Appareil capteur selon la revendication 7, dans lequel ladite unité de sélection de fluide (7) est prise en sandwich entre les récipients d'échantillon de fluide (8) et le support d'échantillon (2).

9. Appareil capteur selon la revendication 7 ou 8, comprenant en outre un élément thermoélectrique (11) disposé sur un côté du support de capteur (2) opposé par rapport aux récipients d'échantillon de fluide (8).

10. Appareil capteur selon l'une des revendications 7 à 9, dans lequel les récipients d'échantillon de fluide (8), l'unité de sélection de fluide (7) et le support de capteur (2) sont disposés en un agencement d'empilement vertical.

11. Appareil capteur selon l'une des revendications 7 à 9, comprenant en outre un boîtier thermiquement isolant (21) dans lequel sont contenus les récipients d'échantillon de fluide (8), l'unité de sélection de fluide (7) et le support de capteur (2), un intérieur du boîtier (21) ayant une température sensiblement homogène.

12. Appareil capteur selon la revendication 11,

dans lequel le support de capteur (2) est monté de manière amovible à l'intérieur du boîtier (21), et

le boîtier (21) comporte un couvercle (23) pouvant être ouvert pour permettre le retrait/l'insertion du support de capteur (2).

13. Appareil capteur selon la revendication 3, 4 ou 9, dans lequel l'élément thermoélectrique est un élément Peltier.

*Fig. 1*

Fig. 2

Fig. 3

Fig. 4

EP 4 191 241 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109374730 B

- JP 2018192215 A